# EUROPEAN PATENT APPLICATION

(11) **EP 4 369 589 A1**
(43) Date of publication of application: **15.05.2024**
(21) Application number: 22275140.6
(22) Date of filing: 09.11.2022
(51) Int. Cl.: H02M 7/483, H02M 1/32, H02M 1/00

(54) **SWITCHING VALVE FOR A VOLTAGE SOURCE CONVERTER**

(71) Applicant: General Electric Technology GmbH, 5400 Baden (CH)
(72) Inventor: Davidson,, Colin, Stafford (GB); Vodden,, John, Stafford (GB); Olalquiaga San Emeterio,, Mikel, Stafford (GB)
(74) Representative: Openshaw & Co.

(57) **Abstract**

A switching valve for a voltage source converter (20), the switching valve comprising a plurality of modules (44), each module (44) including one or more switching elements (46) and at least one energy storage device (48), the or each switching element (46) and the or each energy storage device (48) in each module (44) arranged to be combinable to selectively provide a voltage source, the switching valve including a controller (50) programmed to selectively control the switching of the switching elements (46) to select one or more of the modules (44) to contribute a or a respective voltage to a switching valve voltage, wherein the controller (50) is configured to: detect a fault condition; in response to detecting the fault condition, simultaneously provide blocking signals to each module (44); and wherein each respective module (44) of the plurality of modules (44) is configured to: receive a respective one of the blocking signals; in response to receiving the respective blocking signal, determine a respective random or quasi-random delay period; after a time interval equal to the respective random or quasi-random delay period, switch the one or more switching elements of the respective module into a non-conducting state.

## Description

This invention relates to a switching valve for a voltage source converter and a method of operating a switching valve for a voltage source converter, preferably although not necessarily for use in high voltage direct current (HVDC) transmission.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power may also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to effect the required conversion from AC to DC or from DC to AC.

According to a first aspect of the invention there is provided a switching valve for a voltage source converter, the switching valve comprising a plurality of modules, each module including one or more switching elements and at least one energy storage device, the or each switching element and the or each energy storage device in each module arranged to be combinable to selectively provide a voltage source, the switching valve including a controller programmed to selectively control the switching of the switching elements to select one or more of the modules to contribute a or a respective voltage to a switching valve voltage, wherein the controller is configured to:
detect a fault condition;
in response to detecting the fault condition, simultaneously provide blocking signals to each module; and
wherein each respective module of the plurality of modules is configured to:
   receive a respective one of the blocking signals;
   in response to receiving the respective blocking signal, determine a respective random or quasi-random delay period;
   after a time interval equal to the respective random or quasi-random delay period, switch the one or more switching elements of the respective module into a non-conducting state.

Optionally, each module may comprise a processor, a clock and a counter, and the counter may be configured to increment/decrement once every clock cycle and to reset after a predetermined number of increments/decrements; the processor may be configured to switch the one or more switching elements of the module into the non-conducting state when the counter satisfies a predetermined threshold condition.

Optionally, the predetermined threshold condition may comprise the counter reaching a predetermined count.

Optionally, the predetermined count may be the predetermined number of increments.

Optionally, satisfying the predetermined threshold condition may comprise either: that the counter has not reached a first predetermined threshold count upon the module receiving the respective blocking signal; or that the counter, having at least reached the first predetermined threshold count upon the module receiving the respective blocking signal, subsequently reaching a second predetermined threshold count.

Optionally, the second predetermined threshold count: may be the predetermined number of increments.

Optionally, a ratio defined as: the first predetermined threshold count; divided by the second predetermined threshold count; may correspond to a proportion of the plurality of modules (44) such that simultaneous switching of the proportion of the plurality of modules into the non-conducting state generates a transient voltage pulse less than a predetermined maximum transient voltage level.

Optionally, satisfying the predetermined threshold condition may comprise either: that the counter has reached at least a first predetermined threshold count upon the module receiving the respective blocking signal; or that the counter, having not reached the first predetermined threshold count upon the module receiving the respective blocking signal, subsequently reaching the first predetermined threshold count.

Optionally, a ratio defined as: a difference between the predetermined number of increments and the first predetermined threshold count; divided by the predetermined number of increments; may correspond to a proportion of the plurality of modules (44) such that simultaneous switching of the proportion of the plurality of modules generates a transient voltage pulse less than or equal to a predetermined maximum transient voltage level.

Optionally, satisfying the predetermined threshold condition may comprise either: that the counter is between a first predetermined threshold count and a second predetermined threshold count upon receiving the respective blocking signal; or that the counter, having not reached the first predetermined threshold count or having exceeded the second predetermined count threshold upon receiving the respective blocking signal, subsequently reaches the first predetermined threshold count.

Optionally, a ratio defined as: a difference between the second predetermined threshold count and the first predetermined threshold count, divided by the predetermined number of increments; may correspond to a proportion of the plurality of modules (44) such that simultaneous switching of the proportion of the plurality of modules generates a transient voltage pulse less than or equal to a predetermined maximum transient voltage level

Optionally, the predetermined maximum transient voltage level may be equal to a steady state voltage level achieved after each respective module (44) of the plurality of modules (44) has been switched into the non-conducting state.

Optionally, the predetermined maximum transient voltage level may be less than an insulation failure voltage for the switching valve.

Optionally, the counter may be configured to reset after a fixed time interval.

Optionally, the fixed time interval may be 100 microseconds.

Optionally, the fixed time interval may be 30 microseconds.

Optionally, each module may comprise a processor, a clock and a counter, and the counter may be configured to increment/decrement once after a predetermined number of clock cycles and to reset after a predetermined number of increments/decrements; the processor may be configured to switch the one or more switching elements of the module into the non-conducting state when the counter satisfies a predetermined threshold condition.

Optionally, each respective module of the plurality of modules may be configured to increment/decrement once after a different respective predetermined number of clock cycles.

Optionally, each respective module of the plurality of modules may be configured to reset after a different respective predetermined number of increments/decrements.

Optionally, each respective module may be configured to switch the one or more switching elements of the respective module into the non-conducting state immediately after the time interval equal to the respective random or quasi-random delay period has expired.

Optionally, the clock of each respective module may be asynchronous with respect to the clock of every other module of the plurality of modules.

According to a further aspect of the invention there is provided a computer-implemented method for controlling a switching valve for a voltage source converter, the switching valve comprising a plurality of modules, each module including one or more switching elements and at least one energy storage device, the or each switching element and the or each energy storage device in each module arranged to be combinable to selectively provide a voltage source, the switching valve including a controller programmed to selectively control the switching of the switching elements to select one or more of the modules to contribute a or a respective voltage to a switching valve voltage, the method comprising:
detecting a fault condition;
in response to detecting the fault condition, simultaneously providing blocking signals to each module; and
at each respective module of the plurality of modules:
   receiving a respective one of the blocking signals;
   in response to receiving the respective blocking signal, determining a respective random or quasi-random delay period;
   after a time interval equal to the respective random or quasi-random delay period, switching the one or more switching elements of the respective module into a non-conducting state.

The features and advantages of the switching valve of the first aspect of the invention and its embodiments apply mutatis mutandis to the features and advantages of the further aspect of the invention and its embodiments.

Each module may vary in configuration, non-limiting examples of which are set out as follows.

In a first exemplary configuration of a module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions.

In a second exemplary configuration of a module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

The plurality of modules may be connected in series to define a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. Hence the chain-link converter is capable of providing a wide range of complex voltage waveforms.

At least one switching element may be a wide-bandgap material based switching element or a silicon semiconductor based switching element. Examples of wide-bandgap materials include, but are not limited to, silicon carbide, boron nitride, gallium nitride and aluminium nitride.

At least one switching element may include at least one self-commutated switching device. The or each self-commutated switching device may be an insulated gate bipolar transistor (IGBT), a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

The configuration of the voltage source converter may vary depending on its operating requirements.

In embodiments of the invention, the voltage source converter may include at least one converter limb, the or each converter limb extending between first and second DC terminals, the or each converter limb including first and second limb portions separated by an AC terminal, each limb portion including a switching valve according to any one of the first aspect of the invention and its embodiments.

In a preferred embodiment of the invention, the voltage source converter includes three converter limbs, each of which is connectable via the respective AC terminal to a respective phase of a three-phase AC network. It will be appreciated that the voltage source converter may include a different number of converter limbs, each of which is connectable via the respective AC terminal to a respective phase of an AC network with the corresponding number of phases.

It will be understood that the controller may be implemented as a single control unit or a plurality of control units. For example, the controller may include a plurality of control units, each of which is configured to control a respective module or a respective switching element. Each control unit may be configured to communicate with at least one other control unit via telecommunications links and/or a central control unit. Each control unit may be configured to communicate with a central control unit via telecommunications links.

In embodiments employing a plurality of controllers, the controllers may be implemented as separate controllers or may be implemented as part of the same control system. Each controller may be configured to communicate with at least one other controller via telecommunications links and/or a central controller (also known as a global controller). Each controller may be configured to communicate with a central controller via telecommunications links.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figure 1 shows an example embodiment of a voltage source converter;
Figure 2 shows an example embodiment of a single half-bridge module of a voltage source converter;
Figure 3 shows an example embodiment of a single full-bridge module of a voltage source converter;
Figure 4 shows an example embodiment of part of a switching valve for a voltage source converter and a more detailed schematic diagram of a single module of the switching valve;
Figure 5 shows an example embodiment of charts of switching valve voltages and currents with respect to time when a blocking command is executed;
Figure 6 shows an example embodiments of charts of switching valve voltages over time when different types of blocking command are executed;
Figure 7 shows an example embodiment of a timing diagram for staggered execution of a blocking command;
Figure 8 shows an example embodiment of a chart of voltage with respect to time when a staggered blocking command is executed;
Figure 9 shows an example embodiment of a flow chart of a method for implementing a staggered blocking command for a switching valve.

The figures are not necessarily to scale, and certain features and certain views of the figures may be shown exaggerated in scale or in schematic form in the interests of clarity and conciseness.

The following embodiment of the invention is used primarily in HVDC applications, but it will be appreciated that the following embodiment of the invention is applicable mutatis mutandis to other applications operating at different voltage levels. The following embodiment of the invention is described with reference to an AC-DC voltage source converter, but it will be appreciated that the following embodiment of the invention is applicable mutatis mutandis to other types of converters, including AC-AC converters and DC-DC converters, and other type of switching assemblies and equipment.

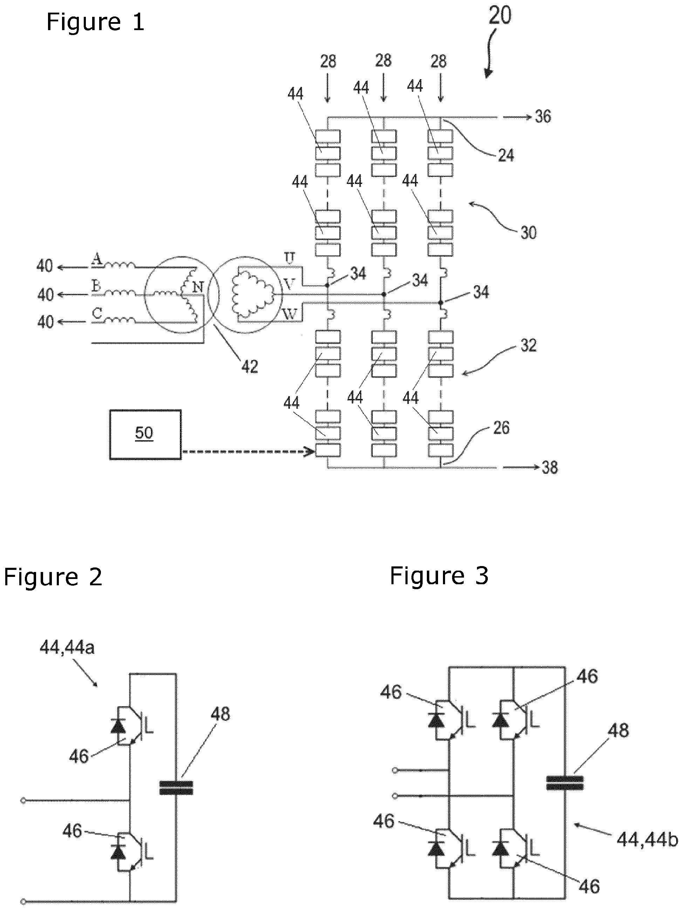

A voltage source converter according to an embodiment of the invention is shown in Figure 1 and is designated generally by the reference numeral 20.

The voltage source converter 20 includes first and second DC terminals 24,26 and a plurality of converter limbs 28. Each converter limb 28 extends between the first and second DC terminals 24,26 and includes first and second limb portions 30,32 separated by a respective AC terminal 34. In each converter limb 28, the first limb portion 30 extends between the first DC terminal 24 and the AC terminal 34, while the second limb portion 32 extends between the second DC terminal 26 and the AC terminal 34.

In use, the first and second DC terminals 24,26 of the voltage source converter 20 are respectively connected to a DC network 36,38. In use, the AC terminal 34 of each converter limb 28 of the voltage source converter 20 is connected to a respective AC phase of a three-phase AC network 40 via a star-delta transformer arrangement 42. It is envisaged that in other embodiments of the invention the transformer arrangement 42 may be a star-star transformer arrangement, may be another type of transformer arrangement or may be omitted altogether. The three-phase AC network 40 is an AC power grid 40.

Each limb portion 30,32 includes a switching valve, which includes a chain-link converter that is defined by a plurality of series-connected modules 44.

Each module 44 may vary in topology, examples of which are described as follows.

Figure 2 shows schematically the structure of an exemplary module 44 in the form of a half-bridge module 44a. The half-bridge module 44a includes a pair of switching elements 46 and a capacitor 48. Each switching element 46 of the half-bridge module 44a is in the form of an IGBT which is connected in parallel with an anti-parallel diode. The pair of switching elements 46 are connected in parallel with the capacitor 48 in a half-bridge arrangement to define a 2-quadrant unipolar module 44a that can provide zero or positive voltage and can conduct current in both directions.

Figure 3 shows schematically the structure of an exemplary module 44 in the form of a full-bridge module 44b. The full-bridge module 44b includes two pairs of switching elements 46 and a capacitor 48. Each switching element 46 of the full-bridge module 44b is in the form of an IGBT which is connected in parallel with an anti-parallel diode. The pairs of switching elements 46 are connected in parallel with the capacitor 48 in a full-bridge arrangement to define a 4-quadrant bipolar module 44b that can provide negative, zero or positive voltage and can conduct current in both directions.

The structure of a given module 44 includes the arrangement and type of switching elements 46 and energy storage device 48 used in the given module 44. It will be appreciated that it is not essential for all of the modules 44 to have the same module structure. For example, the plurality of modules 44 may comprise a combination of half-bridge modules 44a and full-bridge modules 44b.

It is envisaged that, in other embodiments of the invention, each switching element 46 of each module 44 may be replaced by a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. It is also envisaged that, in other embodiments of the invention, each diode may be replaced by a plurality of series-connected diodes.

The capacitor 48 of each module 44 is selectively bypassed or inserted into the corresponding chain-link converter by changing the states of the switching elements 46. This selectively directs current through the capacitor 48 or causes current to bypass the capacitor 48, so that the module 44 provides a zero or non-zero voltage.

The capacitor 48 of the module 44 is bypassed when the switching elements 46 in the module 44 are configured to form a short circuit in the module 44, whereby the short circuit bypasses the capacitor 48. This causes current in the corresponding chain-link converter to pass through the short circuit and bypass the capacitor 48, and so the module 44 provides a zero voltage, i.e. the module 44 is configured in a bypassed mode.

The capacitor 48 of the module 44 is inserted into the corresponding chain-link converter when the switching elements 46 in the module 44 are configured to allow the current in the corresponding chain-link converter to flow into and out of the capacitor 48. The capacitor 48 then charges or discharges its stored energy so as to provide a non-zero voltage, i.e. the module 44 is configured in a non-bypassed mode.

In this manner the switching elements 46 in each module 44 are switchable to control flow of current through the corresponding capacitor 48.

It is possible to build up a combined voltage across each chain-link converter, which is higher than the voltage available from each of its individual modules 44, via the insertion of the capacitors of multiple modules 44, each providing its own voltage, into each chain-link converter. In this manner switching of the switching elements 46 in each module 44 causes each chain-link converter to provide a stepped variable voltage source, which permits the generation of a voltage waveform across each chain-link converter using a step-wise approximation. Hence, the switching elements 46 in each limb portion 30,32 are switchable to selectively permit and inhibit flow of current through the corresponding capacitor 48 in order to control a voltage across the corresponding limb portion 30,32.

It is envisaged that, in other embodiments of the invention, each module 44 may be replaced by another type of module which includes at least one switching element and at least one energy storage device, the or each switching element and the or each energy storage device in each such module arranged to be combinable to selectively provide a voltage source.

It is also envisaged that, in other embodiments of the invention, the capacitor 48 in each module 44 may be replaced by another type of energy storage device which is capable of storing and releasing energy to provide a voltage, e.g. a battery or a fuel cell.

The voltage source converter further includes a controller 50 configured, e.g. programmed, to control the switching of the switching elements 46.

For the purposes of simplicity, the controller 50 is exemplarily described with reference to its implementation as a single control unit. In other embodiments, the controller 50 may be implemented as a plurality of control units. The configuration of the controller 50 may vary depending on specific requirements of the voltage source converter 20. For example, the controller 50 may include a plurality of control units, each of which is configured to control the switching of the switching elements 46 of a respective one of the modules 44. Each control unit may be configured to be internal to, or external of, the corresponding module 44. Alternatively, the controller 50 may include a combination of one or more control units internal to the corresponding module 44 and one or more control units external of the corresponding module 44. Each control unit may be configured to communicate with at least one other control unit via telecommunications links and/or via a central control unit. Each control unit may be configured to communicate with a central control unit via telecommunications links.

In order to transfer power between the DC and AC networks 36,38,40, the controller 50 controls the switching of the switching elements 46 of the modules 44 to switch the capacitors 48 of the respective limb portions 30,32 into and out of circuit between the respective DC and AC terminals 24,26,34 to interconnect the DC and AC networks 36,38,40. The controller 50 switches the switching elements 46 of the modules 44 of each limb portion 30,32 to provide a stepped variable voltage source between the respective DC and AC terminals 24,26,34 and thereby generate a voltage waveform so as to control the configuration of an AC voltage waveform at the corresponding AC terminal 34 to facilitate the transfer of power between the DC and AC networks 36,38,40.

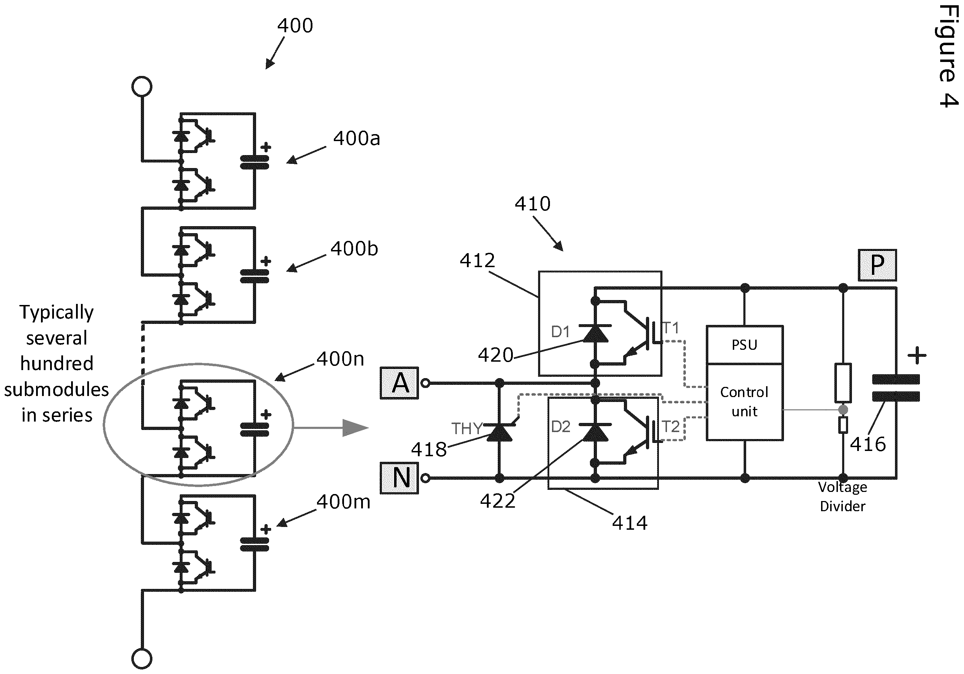

Figure 4 shows part of a Modular Multilevel Converter (MMC) valve 400 for high-power applications such as HVDC. The valve 400 contains a series of submodules 402a-m (which may equivalently be referred to as modules), which in practical implementations may number several hundred. Figure 4 also shows a more detailed schematic diagram of one submodule 410. As described in detail below, the valve 400 is designed to execute a protective blocking command such that the transient overshoot voltage, which would occur if all submodules were blocked simultaneously, is advantageously reduced.

The central concept involves arranging that the submodules 402a-m in the valve 400 are not all blocked at the same time but instead that the blocking is "staggered" over a short period, which may be a period of a few microseconds to a few tens of microseconds or one hundred microseconds. However, the blocking command is sent simultaneously from a central controller to all submodules 402a-m, and random delays are then added in each individual submodule.

The half-bridge submodules 402a-m of the valve 400 are all essentially the same with an internal structure shown in the enlarged submodule 410. The submodule 410 contains two IGBT/diode pairs 412, 414 and a capacitor 416, along with certain other optional components, which could include a mechanical bypass switch (BPS) (not shown) and/or a protection thyristor 418 (THY). Certain fault conditions may require the HVDC converter to be rapidly shut down. In such circumstances, when a fault condition is detected, the first action taken is to command all submodules 402a-m to block (i.e., all IGBTs to turn off, into a non-conducting state). If all submodules 402a-m are blocked at the same time (which would seem to be the natural thing to do, since protective shutdown is meant to be fast), the effect of parasitic (stray) inductances and capacitances in the valve 400 structure will be that a problematic transient overshoot voltage is generated.

With all IGBTs off, the only two paths that current can take through the submodule 410 are (a), for positive (downwards) current, through a first diode D1 420 and the capacitor 416, or b) for negative (upwards) current, through a second diode D2 422 or the parallel combination of the second diode D2 422 and the thyristor THY 418.

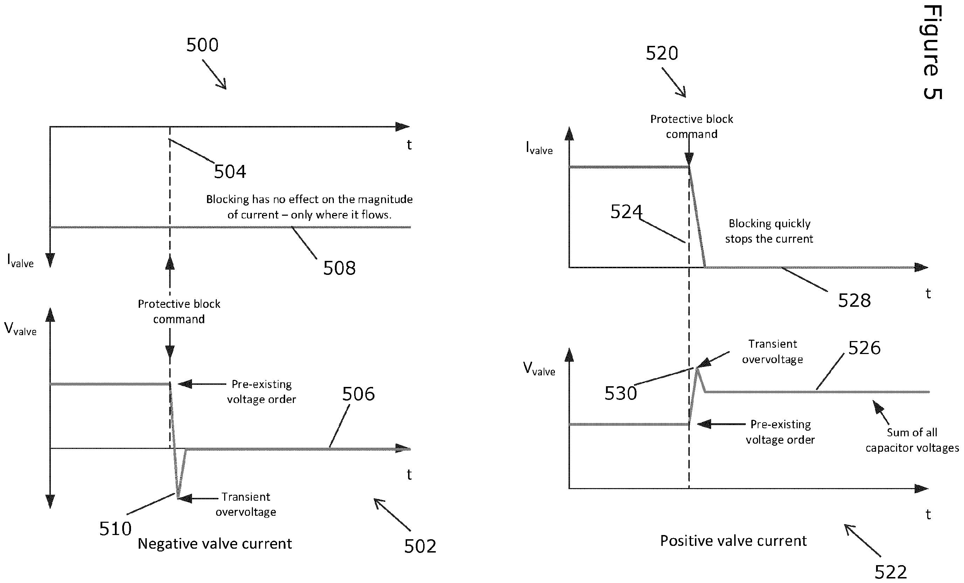

Figure 5 shows charts 500, 502, 520, 522 of current and voltage as a function of time for a valve where all modules are switched off at the same time. A first pair of charts show a graph of negative valve current over time 500 and a corresponding graph of voltage over time 502, where the blocking command for all modules is provided at a particular time 504. For negative valve current, the effect of blocking is that all submodules are bypassed and the voltage produced by the valve will fall to zero 506; the current 508 however will continue unaffected. For negative valve current, the voltage overshoot 510 occurs in the negative direction and may not necessarily be large enough to be problematic.

A second pair of charts show a graph 520 of positive current and a corresponding graph 522 of the voltage. The blocking command is provided at a particular time 524, the result of which is that the capacitor of every submodule in the valve is inserted into the current path. This results in a large valve voltage 526 which will normally result in the valve current stopping 528 very quickly. For valve current in the positive direction the voltage overshoot 530 will add to the (already large) voltage produced by the sum of all capacitors in the valve. This overshoot voltage 530 could be large enough to provoke an insulation failure in the valve, leading to further damage.

A solution to the problem of how to avoid damaging overshoot voltages is to vary the time instants at which the different submodules are blocked. Since each submodule contains a very large capacitor (typically several millifarads), delaying the switching of one submodule by a few microseconds with respect to another will not result in any significant excess voltage on that submodule. When a protective shutdown situation occurs, such as an insulation failure within the converter station, the protective blocking command is issued centrally from the ground-level control and protection system, simultaneously to all submodules.

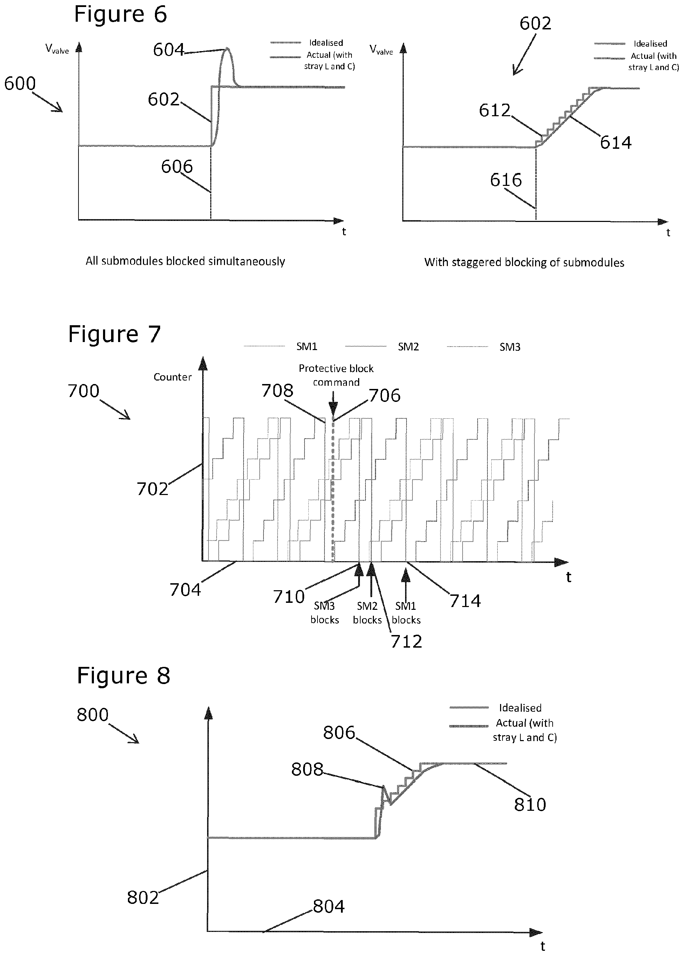

Figure 6 shows a first graph 600, which shows idealized 602 and actual 604 voltages with respect to time within a valve when a protective shutdown is implemented, at a given time 606, with all submodules switched off at that same time 606. The actual voltage 604 shows a pronounced overvoltage spike, as a consequence of the stray inductances and capacitances within the valve. A second graph 610 shows idealized 612 and actual 614 voltages within a similar valve when a protective shut down is implemented in a staggered way, beginning at a particular time 616. On receipt of the protective blocking command (which is an example of a blocking signal), each submodule determines a random or quasi-random delay, which varies between a delay of zero and a delay of the order of 10 or 20 microseconds, before it blocks the IGBTs in that submodule. It will be appreciated that the delay may not be truly random in strict mathematical sense, but that the random or quasi-random delay will be substantially uncorrelated between the different submodules of the valve. The actual blocking of the IGBT, which corresponds to the switching components of the module being switched into their non-conducting state, occurs as soon as the random or quasi-random delay period has elapsed. The effect of this is to force the voltage produced by the valve to change relatively smoothly, as shown in the actual voltage 614, in a series of small steps to the final value, rather than in a single large step if all submodules acted upon the command immediately, as in the first graph 600.

Each submodule conventionally includes a local control unit that is responsible for coordinating the switching and protection of any IGBTs within the submodule as well as, optionally, other components such as a bypass thyristor (THY) and/or a mechanical bypass switch. The local control unit typically obtains its power from the voltage across the submodule capacitor. In order to realise the local control and protection functions, the local control unit typically contains a processor, such as a microprocessor, or a programmable logic device such as a field-programmable gate array (FPGA), which in turn normally includes a clock.

The clock that is anyway required for the normal operation of the control and protection logic is used to drive a counter, which increments once every clock cycle, and which resets itself to zero after a pre-determined number of clock cycles, which may also be referred to as a predetermined number of increments. It will be appreciated that the counter could instead decrement once every clock cycle and provide equivalent functionality to that based on incrementing once every clock cycle. Further, the counter could increment, or decrement, once after a predetermined number of clock cycles, such as every third, fifth or seventh clock cycle, for example. In one possible implementation each submodule may have a counter that increments (or decrements) after the same number of clock cycles as the other submodules. However, in other examples, different submodules, or subsets of submodules, may have counters that increment (or decrement) after different numbers of clock cycles and may reset after different predetermined numbers of increments (or decrements).

In one possible implementation, the counter could just reset when it overflows, i.e. when it passes from all bits being one to all bits being zero. A twelve-bit counter would then reset to zero after 4096 clock cycles. In a simple, but nevertheless favourable, implementation, the resetting of the counter can be used to act upon the protective blocking command sent from ground level. The sequence acted upon at the submodule would then be:
- receive protective blocking command;
- wait for counter to reset;
- block IGBTs.

More generally, the submodule is switched into its non-conducting state when the counter satisfies a predetermined threshold condition, which could be the counter resetting when it overflows, or could be when the counter reaches a predetermined count before overflow occurs.

Since the clocks on every individual submodule are asynchronous, the counter on each submodule could be randomly in any state, with the result that the delay introduced by each submodule is also random. By an appropriate choice of the number of bits in the counter, the delay can be made to vary over a defined range. For example, with a 12-bit counter and a clock period of ten nanoseconds, the delay would vary randomly from zero to 40.95 microseconds. In other examples, the delay may vary between zero and 100 microseconds, after which time the counter resets.

Figure 7 shows a chart 700 that illustrates the principle for a three-bit counter (counting from zero to seven) with three submodules. In practice, both the number of bits and the number of submodules would be much larger than this, however, this example shows one method by which a staggered shutdown can be implemented. The chart 700 shows the value of each counter 702 plotted against time 704. A protective shutdown command is sent to all submodules at the same time 706. Shortly before the shutdown command time 706, a first submodule has reset 708. Consequently, the first submodule will be the last submodule to shut down. A third submodule is the earliest to shut down at a first time 710, followed by a slightly later shut down of the second submodule at a second time 712 and finally, the first submodule shuts down at a third time 714, thereby completing the staggered shutdown process.

A counter which resets to zero only when it overflows is very simple but somewhat constrains the range of delay that can be achieved. The maximum delay is constrained to be the clock period (in nanoseconds) multiplied by (2ⁿ-1) where n is the number of bits. However, it is straightforward to arrange the counter to be reset when a pre-determined count has been reached, and in that case the pre-determined count does not need to be constrained to (2ⁿ-1). For example, the 12-bit counter driven by a 10 nanosecond clock (as mentioned earlier) could be arranged to reset its counter when it reaches a predetermined count of 3000, which would give a random delay of 0 to 30 microseconds. The count values from 3001 to 4095 would simply never be used in this case.

Alternatively, instead of waiting for the counter to reset before blocking the IGBTs, the submodule could act upon the block command immediately on any submodules whose counter was above or below a certain pre-determined level (not equal to the reset level), acting on the remainder when they next meet that criterion. The effect of this is that a proportion of the submodules would block immediately and the remainder would block at random intervals shortly afterwards. Continuing with the previous example, if the submodule has a 12-bit counter which resets when it overflows but is arranged to block IGBTs when the counter exceeds 3000, then on receipt of the protective block command from the central control system:
- those submodules whose counters were above 3000 (on average, approximately 27% of the total) would block their IGBTs immediately;
- those submodules whose counters were below 3000 would block their IGBTs when the counter reaches 3000, introducing a random delay in the range from zero to 30 microseconds.

This would result in the blocking of the submodules being skewed towards the start of the available time window.

More generally, the switching off of a given submodule may occur when the counter has not reached a first predetermined threshold at the time that the blocking signal is received by that submodule. In this case, the submodule switches into the non-conducting state immediately. However, another submodule that has at least reached the first predetermined threshold will not switch off immediately, but will wait until its counter reaches a second predetermined threshold that is higher than the first predetermined threshold. In some cases the second predetermined threshold may be the predetermined number of increments at which the counter overflows. In other cases the second predetermined threshold may be a lower count than that required for overflow, in which case the counter is configured to reset on reaching the second predetermined threshold and the counter values between the second predetermined threshold and the maximum counter value are not used.

A ratio defined by the first predetermined threshold count divided by the second predetermined threshold count may be chosen to correspond to a proportion of the submodules that can safely be switched into the non-conducting state simultaneously. That the simultaneous switching is safe means that the resulting transient voltage pulse is less than a predetermined maximum transient voltage level that has been determined to be safe. In one example, the maximum transient voltage level may be selected to match the steady state voltage level that occurs when all of the submodules have been switched off and any transient effects have dissipated.

Alternatively, the predetermined threshold condition for switching a submodule into a non-conducting state may be that the counter has reached at least a first predetermined threshold count at the time that the blocking signal is received. Conversely, if a submodule has not reached the first predetermined threshold when the blocking signal arrives, the submodule may delay switching off until the first predetermined threshold count is achieved. In this instance, a ratio defined by the difference between the predetermined number of increments (before the counter resets) and the first predetermined threshold, divided by the predetermined number of increments may be selected to correspond to a proportion of the submodules that can be safely switched off simultaneously. Again, the proportion of submodules than can be safely switched off can be determined such that the resulting transient voltage pulse is below a predetermined maximum transient voltage level, such as the steady state level that will ultimately be achieved after all of the submodules of the valve have been switched off and any transient effects have dissipated.

However the predetermined maximum transient voltage level is determined, it should be less than an insulation failure voltage for the valve, to avoid causing further damage to the equipment.

Figure 8 shows a chart 800 of voltage 802 against time 804. The chart 800 shows an idealized voltage 806 and an actual voltage 808 that arises because of stray capacitances and inductances. In this instance, the submodules that all block immediately on receipt of the protective blocking command generate a transient overvoltage 808. However, by choosing the proportion of submodules that block immediately as opposed to those that block with a delay, that transient overvoltage 808 can be arranged to be no larger than the peak voltage 810 experienced after all submodules have blocked and any transients have settled. In that way, the transient overvoltage does not need to be design-determining.

It is advantageous to block a proportion of the submodules as soon as possible after receipt of the protective block command, because this will lead to a more rapid cessation of the fault current in the valve.

Examples disclosed herein relate to a protection logic arranged to block the IGBTs in all submodules whose counters exceed a particular threshold but it could equally well be applied in the opposite sense, i.e. all those submodules whose counters are less than a certain threshold. By choosing the magnitude of that threshold with respect to the value at which the counter is reset to zero, the proportion of submodules that will block immediately can be tailored so as to immediately block as many as possible without generating an excessive transient overvoltage, and block the rest randomly in the time interval shortly afterwards.

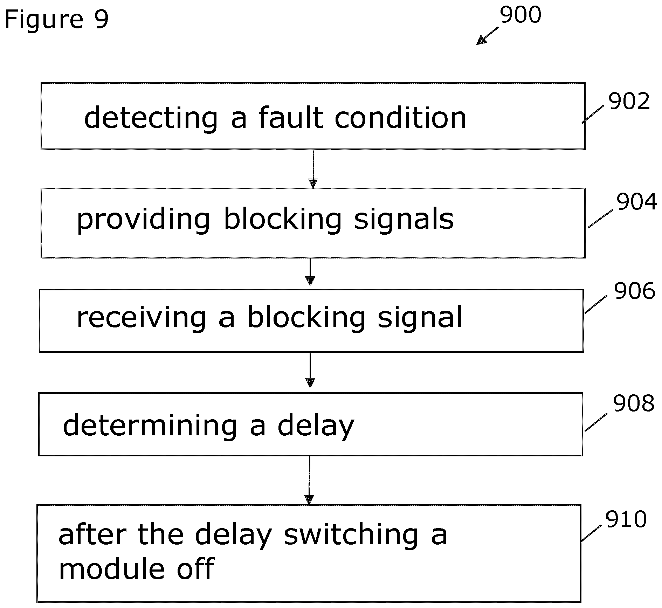

Figure 9 shows a flow chart 900 of a method of controlling a valve for a voltage source converter. At a first step 902, the method commences by detecting a fault condition. At a second step 904, in response to detecting the fault condition, the method simultaneously provides blocking signals to each module of the valve. The method continues at each individual module. At a third step 906, a module receives a respective one of the blocking signals. At a fourth step, the module, in response to receiving the respective blocking signal, determines a respective random or quasi-random delay period. Then, at a fifth step, after a time interval equal to the respective random or quasi-random delay period, the module switches its one or more switching elements into a non-conducting state. In this way, the method enables a smooth shutdown of the valve that can avoid generating a potentially damaging overvoltage spike.

While the blocking command can be simultaneously sent to all submodules there may be other mechanisms for determining a random or quasi-random delay in the submodules. These could include using the embedded serial number of the electronics board, the physical location of the submodule, or its communication slot ID, as ways to create a quasi-random delay.

The advantage of implementing a staggered blocking function is that the transient overvoltage generated during the blocking process is reduced. This can lead to a reduced requirement for clearance distance around and within the valve, allowing it to be more compact.

The present method of controlling a valve is advantageously simple because the control system at ground potential can issue the protective blocking command simultaneously to all submodules (simplifying the control logic) and the delay is added locally at each submodule. Since the added delay is essentially random, as the clocks and counters at different modules are not synchronized, the delays are not "pre-determined" or "sequential". Moreover, the code needed at the submodule control electronics to generate the required random delay is extremely simple: it is essentially just a counter which resets itself to zero at a certain level and is driven by the clock in the processor which is required anyway for the functioning of the processor, thereby avoiding the need to include additional components in the overall design.

It will be appreciated that any above numerical values are merely intended to help illustrate the working of the invention and may vary depending on the requirements of the voltage source converter and the power application.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A switching valve for a voltage source converter (20), the switching valve comprising a plurality of modules (44), each module (44) including one or more switching elements (46) and at least one energy storage device (48), the or each switching element (46) and the or each energy storage device (48) in each module (44) arranged to be combinable to selectively provide a voltage source, the switching valve including a controller (50) programmed to selectively control the switching of the switching elements (46) to select one or more of the modules (44) to contribute a or a respective voltage to a switching valve voltage,
wherein the controller (50) is configured to:
detect a fault condition;
in response to detecting the fault condition, simultaneously provide blocking signals to each module (44); and
wherein each respective module (44) of the plurality of modules (44) is configured to:
receive a respective one of the blocking signals;
in response to receiving the respective blocking signal, determine a respective random or quasi-random delay period;
after a time interval equal to the respective random or quasi-random delay period, switch the one or more switching elements of the respective module into a non-conducting state.

2. The switching valve of claim 1, wherein each module (44) comprises a processor, a clock and a counter, and wherein:
the counter is configured to increment or decrement once every clock cycle and to reset after a predetermined number of increments or decrements, respectively;
the processor is configured to switch the one or more switching elements of the module into the non-conducting state when the counter satisfies a predetermined threshold condition.

3. The switching valve of claim 2, wherein the predetermined threshold condition comprises the counter reaching a predetermined count.

4. The switching valve of claim 3, wherein the predetermined count is the predetermined number of increments.

5. The switching valve of claim 2, wherein satisfying the predetermined threshold condition comprises either:
that the counter has not reached a first predetermined threshold count upon the module receiving the respective blocking signal; or
that the counter, having at least reached the first predetermined threshold count upon the module receiving the respective blocking signal, subsequently reaching a second predetermined threshold count equal to the predetermined number of increments.

6. The switching valve of claim 5, wherein:
a ratio defined as:
the first predetermined threshold count; divided by
the second predetermined threshold count;
corresponds to a proportion of the plurality of modules (44) such that simultaneous switching of the proportion of the plurality of modules into the non-conducting state generates a transient voltage pulse less than a predetermined maximum transient voltage level.

7. The switching valve of claim 2, wherein satisfying the predetermined threshold condition comprises either:
that the counter has reached at least a first predetermined threshold count upon the module receiving the respective blocking signal; or
that the counter, having not reached the first predetermined threshold count upon the module receiving the respective blocking signal, subsequently reaching the first predetermined threshold count.

8. The switching valve of claim 7, wherein:
a ratio defined as:
a difference between the predetermined number of increments and the first predetermined threshold count; divided by
the predetermined number of increments;
corresponds to a proportion of the plurality of modules (44) such that simultaneous switching of the proportion of the plurality of modules generates a transient voltage pulse less than or equal to a predetermined maximum transient voltage level.

9. The switching valve of claim 2, wherein satisfying the predetermined threshold condition comprises either:
that the counter is between a first predetermined threshold count and a second predetermined threshold count upon receiving the respective blocking signal; or
that the counter, having not reached the first predetermined threshold count or having exceeded the second predetermined count threshold upon receiving the respective blocking signal, subsequently reaches the first predetermined threshold count; and wherein optionally:
a ratio defined as:
a difference between the second predetermined threshold count and the first predetermined threshold count, divided by
the predetermined number of increments;
corresponds to a proportion of the plurality of modules (44) such that simultaneous switching of the proportion of the plurality of modules generates a transient voltage pulse less than or equal to a predetermined maximum transient voltage level

10. The switching valve of claim 6, claim 8, or claim 9, wherein the predetermined maximum transient voltage level is equal to a steady state voltage level achieved after each respective module (44) of the plurality of modules (44) has been switched into the non-conducting state.

11. The switching valve of claim 6, claim 8, or claim 9, wherein the predetermined maximum transient voltage level is less than an insulation failure voltage for the switching valve.

12. The switching valve of any of claims 2 to 11, wherein the counter is configured to reset at least every 100 microseconds.

13. The switching valve of any preceding claim, wherein each respective module is configured to switch the one or more switching elements of the respective module into the non-conducting state immediately after the time interval equal to the respective random or quasi-random delay period has expired.

14. The switching valve of any preceding claim, wherein the clock of each respective module (44) is asynchronous with respect to the clock of every other module (44) of the plurality of modules (44).

15. A computer-implemented method for controlling a switching valve for a voltage source converter, the switching valve comprising a plurality of modules (44), each module (44) including one or more switching elements (46) and at least one energy storage device (48), the or each switching element (46) and the or each energy storage device (48) in each module (44) arranged to be combinable to selectively provide a voltage source, the switching valve including a controller (50) programmed to selectively control the switching of the switching elements (46) to select one or more of the modules (44) to contribute a or a respective voltage to a switching valve voltage, the method comprising:
detecting a fault condition;
in response to detecting the fault condition, simultaneously providing blocking signals to each module (44); and
at each respective module (44) of the plurality of modules (44):
receiving a respective one of the blocking signals;
in response to receiving the respective blocking signal, determining a respective random or quasi-random delay period;
after a time interval equal to the respective random or quasi-random delay period, switching the one or more switching elements of the respective module into a non-conducting state.
